# EUROPEAN PATENT APPLICATION

(11) **EP 2 442 259 A1**
(43) Date of publication of application: **18.04.2012**
(21) Application number: 10785645.2
(22) Date of filing: 18.01.2010
(51) Int. Cl.: G06K 19/077

(54) **SMART CARD CAPABLE OF BEING USED FOR INFRARED COMMUNICATION**

(30) Priority: 12.06.2009 CN 200920108756 U
(71) Applicant: Hierstar Limited (Beijing), Beijing 100102 (CN)
(72) Inventor: YANG, Qiaobang, Beijing 100102 (CN); ZHANG, Zheng, Beijing 100102 (CN); GUO, Jixiang, Beijing 100102 (CN); XIE, Taoling, Beijing 100102 (CN); XIE, Xueli, Beijing 100102 (CN)
(74) Representative: Grünecker, Kinkeldey, Stockmair & Schwanhäusser
(86) International application number: PCT/CN2010/000076
(87) International publication number: WO 2010/142132

(57) **Abstract**

A smart card is disclosed by the present invention. The smart card comprises a flexible keyboard, an ultra thin flexible battery, an infrared data interface, a flexible display, a flexible circuit board and a CPU kernel; wherein the flexible circuit board provides electrical connection for individual parts of the smart card, the flexible keyboard is used for inputting by user, the ultra thin flexible battery provides power supply to the smart card, the infrared data interface is used for infrared communication with an external terminal, the flexible display is used for man-machine interaction, the CPU kernel controls individual parts of the smart card and the smart card is packaged with plastic material. The invention enables the smart card to authenticate off-line user, therefore the security of electronic transaction is ensured. The smart card product of the invention can be carried and used by user conveniently, and can reduce product costs and has very wide application prospect.

## Description

### Technical field

The present invention relates to a smart card.

### Technical Background

A smart card is a card comprising microcircuit chips such as microprocessors, memories, etc, wherein the smart card usually conforms to a standard such as IS07810. The standard of a smart card specifies the card's appearance, thickness, external contact positions, electric signals, contracts, etc. The smart cards, especially those conforming to the standard of ISO7810, have the appearance of a card, providing users with portability and ease of use and lowering cost of production. At present, bank cards and credit cards are tending to be transitioned to chip card and it is a trend to conduct offline user authentication by means of smart card chips. For this, both Visa and Master card, the world's top two credit card organization, have developed respective standards: CAP/DPA.

Most of traditional cards have contacts. When conducting external data communication, a smart card is inserted into a reader, and the reader conducts reading and writing on the card through IO port(s).

However, as the technology of RFID, Bluetooth, etc develops, non-contact data exchange is becoming widely accepted and adopted due to its characteristic of convenience. Therefore, the non-contact data exchange should have a good prospect and can be a necessity in the field of smart card.

The RFID technology can be divided into passive and passive approaches. Because of a antenna being used, the dimension of the internal circuit board of the smart card increases inevitably and notably and, in addition, the complexity of component arrangement increases. Most of passive RFID chips do not have sufficient I/Os to conduct data communication with CPU in the card. For the active RFID, higher drive current is needed for its two-way data communication and the smart card is short in power supply, thus failing to provide satisfying service life.

Other non-contact exchange such as Bluetooth exceeds the RFID in both circuit scale and power consumption; therefore, they cannot be applied in smart cards of limited dimension and bad power supply.

In addition, for sake of security of communication, radio signal of for example RFID is easy to be intercepted, which threats security regarding confidential information.

### Summary of the invention

An object of the invention is to provide a new and safe telecommunication method of using a non-contact smart card.

Another object of the invention is to provide a smart card and a mthod using the same, which meet a requirement of limited dimension and low power consumption.

Therefore, the objects are satisfied by providing a smart card capable of infrared communication.

According to a first aspect, the invention provides a smart card. Said card comprises a flexible keyboard, an ultra thin flexible battery, an infrared data interface, a flexible display, a flexible circuit board and a CPU kernel; wherein the flexible circuit board provides electrical connection for individual parts of the smart card, the flexible keyboard is used for inputting by user, the ultra thin flexible battery provides power supply to the smart card, the infrared data interface is used for infrared communication with an external terminal, the flexible display is used for man-machine interaction, the CPU kernel controls individual parts of the smart card and the smart card is packaged with plastic material.

According to a second aspect, the invention provides the communication method using the smart card according to the first aspect of the invention; wherein the method includes the step of the smart card conducting infrared communication with an external terminal by means of the infrared data interface.

The invention incorporates the flexible display, the flexible circuit board, the battery and the infrared chip in one product of complying with ISO7810, allowing the smart card to conduct an offline user authentication, thus ensuring security of electronic trading; and meeting demands of international standard; meanwhile flexible active electric components are embedded in the card, providing a platform for development of new applications. The smart card production of the invention may be carried and used conveniently, have a lower cost, and have very wide application prospect. The smart card of the invention can meet functional demands of CAP/DPA standard, and, in the meantime, offer possibility of extending the traditional smart card to new applications. In addition, since the infrared transmission signal has a strong directionality, and its transmission distance can controlled by controlling transceiver power in actual use, the security of transmission data can be guaranteed.

### Description of the drawings

The present invention will be more specifically described with respect to the following embodiments by reference to the drawings, wherein,
Figure 1 is a schematic representation of a smart card according to an embodiment of invention;
Figure 2 is a block representation of the smart card of figure 1;
Figure 3 is a sectional view of a terminal coupled to an infrared card reader device.

### Specific modes for carrying out the invention

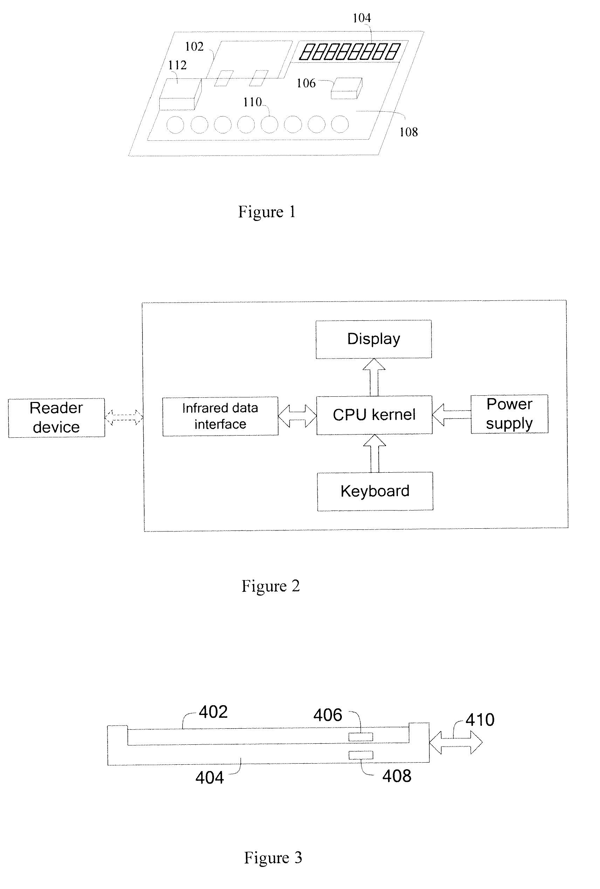

Figure 1 is a schematic representation of a smart card according to an embodiment of invention. As shown in figure 1, the smart card includes a battery 102, a flexible display 104, a CPU kernel 106, a flexible circuit board 108, a flexible key board 110 and an infrared data interface 112. These individual components of the card are packaged within plastic material. In an example, the smart card has a packaged dimension and appearance complying with ISO07810. In another example, the smart card is not provided with an electricity IO interface.

The battery 102 provide for working power for the whole smart card to allow individual parts of the smart card to operate normally; The battery 102 can be any ultra thin flexible battery, for example, a lithium battery or a Ni-MH battery. The flexible circuit board 108 provides necessary electrical connection for individual parts of the smart card. The CPU kernel 106 controls all internal resources and performs computation regarding data algorism. The flexible display 104 is an interaction area that the smart card provides for the user, showing any corresponding computation result. The flexible key board 110 is an interaction and input area that the smart card provides for the user to input data; in an example, the flexible key board 110 is made up of several keys. The infrared data interface 112 is a data interaction interface, receiving data from an external infrared read-write terminal (not shown in the figure); The interface 112 is generally made up of infrared chipset(s).

The smart card of the invention can conduct data exchange with an external terminal by means of infrared communication.

Figure 2 is a block representation of the smart card of figure 1. As shown in figure 2, the smart card comprises a display, an infrared data interface, a keyboard, a CPU kernel and a battery. The battery provides power supply to the smart card. The keyboard is an interaction-input area that the smart card provides for the user. The display is an area of the card for man-machine interaction, showing the user corresponding computation result. The infrared data interface is an interaction interface used for receiving data from an external infrared reader terminal. The CPU kernel is configured for controlling all resources within the card and conducting computation of data algorisms.

The reader device, as a read-write interface of an external terminal, performs data communication with the infrared data interface.

The interaction process of the smart card of the invention will be discussed in details.

### 1.1 initial state

Normally, the infrared data interface of the card will be turned off in default in order to avoid any impact of external interfering signals, such as the sunlight, to the infrared data interface of the card.

### 1.2 infrared communication function of the smart card is turned on

The infrared communication function of the smart card may be turned on by inputing a special command word through the key board; however, a pre-set logic turn-on signal sent by the eternal read-write device should be received in order for the infrared communication to conduct normal data interaction.

### 1.3 The reader device turns on the infrared communication interface of the smart card

After the physical communication channel of infrared data communication is turned on, the read-write device will send a logic turn-on signal to the smart card according to a pre-set communication protocol. After receiving of the logic turn-on signal, the smart card will verify the turn-on signal and, if the signal is correct, torn on the infrared communication interface.

### 1.4 normal data operation of read and write

When the infrared data interface is turned on, the reader device begins a normal data transmission and interaction.

### 1.5 Turn-off of the infrared communication function of the smart card

Each time the data interaction through the infrared data interface is completed, the smart card may check on the data received. If the data is correct, a feedback signal will be sent to the reader device. When receiving the feedback signal, the reader device will confirm whether the previous signal is sent successfully and, if successful, will send a turn-off command word to the smart card, which will then turn off the function of infrared communication.

Figure 3 is a sectional view of a terminal of the infrared card reader device. As shown in figure 3, a terminal 404 of infrared reader device may have a notch design. When the smart card 402 is placed in the notch of the terminal 404 of infrared reader device, an infrared chipset 406 in the smart card 402 is close to an infrared chipset 408 of the infrared reader terminal. Therefore, data communication may be conducted between the infrared chipset 406 and the infrared card reader device by means of a table cable 410 connected between the infrared chipset 408 and an external terminal (not shown) of the infrared card reader. The distance between the infrared card reading device and the smart card of the invention is much shorter compared to that in traditional communication ways, which often requires much longer distance. Therefore, the present invention ensures good communication effect, stronger security of data transmission, reduced power, and longer battery life of the smart card.

The smart card of the invention can be used for ID card, bank card and so on. In one example, the smart card is used for producing a one-time password (OTP). In a scenario, a user may input a personal identification number (PIN) through the flexible key board, and the CPU may generate a pass word according to a synchronous parameter (time or count value), encryption key and PIN (Personal Identification Number), and display the pass word on the flexible display.

The read-write terminal of smart card of the invention may have a flat design in the part of communication with the smart cardto ensure convenience at the time of smart card reading and high efficiency in industrial manufacturing process. The reader terminal of smart card of the invention may have a USB interface in general in the communication part with personal computer (PC), and no additional interface and driver programs are needed to achieve PC compatibility as high as possible.

Since a flexible display is incorporated into the smart card of the invention, the firmware may be designed to improve flexible control of the shown content (driving), and may be optimized so as to reduce negative effect caused by the firmware operation to system power cost.

In addition, the most important part of the firmware design of smart card of the invention is the formulation of infrared communication protocols, taking into consideration communication contract, communication efficiency, and the effect on power cost of communication protocol enforcement.

Obviously, the invention described here may have many changes; however, these changes cannot be considered deviation from the spirit and scope of the present invention. Therefore, the obvious changes to those skilled in the art should be within the spirit and scope of the claims.

## Claims

1. A smart card, comprising a flexible keyboard, an ultra thin flexible battery, an infrared data interface, a flexible display, a flexible circuit board and a CPU kernel; wherein the flexible circuit board provides electrical connection for individual parts of the smart card, the flexible keyboard is configured for inputting by user, the ultra thin flexible battery provides power supply to the smart card, the infrared data interface is used for infrared communication with an external terminal, the flexible display is used for man-machine interaction, the CPU kernel controls individual parts of the smart card and the smart card is packaged with plastic material.

2. The smart card of claim 1, wherein the smart card complies with ISO7810 standard.

3. The smart card of claim 1, wherein the ultra thin flexible battery is a lithium battery.

4. The smart card of claim 1, wherein the ultra thin flexible battery is used to produce one-time password.

5. The smart card of claim 1, wherein the flexible keyboard comprises multiple keys.

6. A method of communication by using the smart card of any one of claim 1-5, wherein the method includes the step of the smart card conducting infrared communication with an external terminal by means of the infrared data interface.
